# EUROPEAN PATENT SPECIFICATION

(11) **EP 1 193 288 B1**
(45) Date of publication and mention of the grant of the patent: **10.08.2005**
(21) Application number: 01121790.8
(22) Date of filing: 20.09.2001
(51) Int. Cl.: C08K 5/21, C08K 5/353, C08L 5/00, C08L 33/02

(54) **Mono(hydroxyalkyl) urea and polysaccharide crosslinking systems**
Vernetzersysteme aus Monohydroxyalkylharnstoff und Polysaccharid
Sytèmes réticulants à partir de la mono(hydroxyalkyl) urée et du polyscaccharide

(30) Priority: 20.09.2000 US 665858
(43) Date of publication of application: 03.04.2002
(73) Proprietor: Celanese International Corporation, Dallas, Texas 75234-6034 (US)
(72) Inventor: Lee, Sharon P., Plainsboro, New Jersey 08536 (US); Pauls, Steven S., Sr., Old Bridge, New Jersey 08857 (US)
(74) Representative: Held, Stephan, Dr.rer.nat., Dipl.-Chem.

(56) References cited:
- EP-A- 0 649 870
- EP-A- 0 900 825
- EP-A- 0 911 361

## Description

### FIELD OF THE INVENTION

The present invention relates to a crosslinking system comprising mono(hydroxyalkyl)urea and a polysaccharide In combination with polyfunctional polymers.

### BACKGROUND OF THE INVENTION

Synthetic polymers are used in a wide variety of applications. In many applications, these synthetic polymers are crosslinked in order to achieve the required performance properties. For over 60 years, a large class of commercially Important thermoset polymers have utilized formaldehyde-based crosslinking agents. Such crosslinking agents based on formaldehyde traditional have provided an efficient and cost-effective means of curing a wide variety of materials. Examples of formaldehyde-based crosslinking agents include melamine-formaldehyde, urea-formaldehyde, phenol-formaldehyde and acrylamide-formaldehyde adducts. With growing toxicity and environmental concerns, there has been an ongoing search to replace formaldehyde-based crosslinking agents. However, these alternative crosslinkers have suffered from significant deficiencies including low or slow cure, requiring end uses to change their commercial high speed application equipment, and emission of toxic components or volatile organic compounds other than formaldehyde.

U.S Patent Number 5,840,822 discloses the use of mono(hydroxyalkyl)urea and 2-oxazolidone crosslinking agents as replacements for formaldehyde-based crosslinking agents.

U.S. Patent Number 5,895,804 discloses crosslinking involving a polycarboxylated polymer having at least two carboxylic acid functional groups and a polysaccharide having a molecular weight of at least 10,000.

Surprisingly, it has been found that there is a synergistic phenomenon using mono(hydroxyalkyl)urea in combination with a polysaccharide as a crosslinking system with di- and/or poly-functionalized molecules and polymers.

### SUMMARY OF THE INVENTION

The present invention relates to the combination of mono(hydroxyalkyl)urea and polysaccharide to form a crosslinking system, and to compositions which utilize such a crosslinking system. The compositions comprise a poly-functional molecule comprising at least two functional groups selected from the group consisting of carboxyl, amine and anhydride; a polysaccharide; and a crosslinking agent present in amounts effective to provide crosslinked compositions. The crosslinking agent comprises only a single urea group, a single hydroxyl group, and there must be at least two carbon atoms disposed between the urea group and the hydroxyl group. The crosslinking agent may also be in the form of 2-oxazolidone which may be either ab initio or formed in situ.

### DETAILED DESCRIPTION OF THE INVENTION

The compositions according to the present invention comprise a poly-functional molecule (PFM), As used herein, "molecule" includes non-polymeric molecules, low molecular weight polymers or oligomers, for instance having molecular weight of less than about 10,000, and higher molecular weight polymers, for instance having molecular weight of greater than about 10,000 to greater than 1,000,000. The actual molecular weight of the molecule is not a limiting factor with respect to the use of the crosslinking agents of the present invention.

The PFM must contain at least two functional groups selected from the group consisting of carboxyl, amine, and anhydride. Exemplary molecules which may be used In the present invention include without limitation citric acid, 1,2,4-benzene tricarboxylic acid, 1,2,4,5-benzene tetracarboxylic acid, 1,2,3,4-butane tetracarboxylic acid, poly(acrylic acid), carboxylic-acid-functionalized polyesters, carboxylic-acid-tunctionalized polyurethanes, and polymers prepared from monomers such as ethylene (E), vinyl acetate (VA), (meth)acrylic acid (M)AA, the C₁-C₈ alkyl esters of (meth)acrylic acid, maleic anhydride (MAnh), maleic acid, itaconic acid (IA), crotonic acid (CA), ï-carboxy ethyl acrylate (BCEA), butadiene and styrene (STY). (Meth)acrylic is used herein to denote both acrylic and methacrylic acids and esters thereof. Exemplary copolymers include ethylene/vinyl acetate/acrylic acid copolymers, vinyl acetate/acrylic acid copolymers, acrylic acid/maleic anhydride copolymers, vinyl acetate/acrylic acid/maleic anhydride copolymers, ethylene/acrylic acid copolymers, ethylene/methacrylic acid copolymers, ethylene/vinyl acetate/acrylic acid/maleic anhydride copolymers, vinyl acetate/maleic anhydride copolymers, ethylene/vinyl acetate/maleic anhydride copolymers, methyl methacrylate/butyl acrylate/acrylic acid copolymers, methyl methacrylate/ethyl acrylate/acrylic acid copolymers, methyl methacrylate/butyl acrylate/itaconic acid copolymers, butyl acrylate/acrylic acid copolymers, butyl acrylate/SCEA copolymers, ethyl acrylate/acrylic acid copolymers, 2-ethylhexyl acrylate/acrylic acid copolymers, methyl methacrylate/ethyl (meth)acrylate/itaconic acid copolymers, styrene/(meth)acrylic acid copolymers, styrene/maleic anhydride copolymer, styrene/(meth)acrylic acid/maleic anhydride copolymers, styrene/itaconic acid copolymers and styrene/butadiene copolymers, Additionally, polymers comprising anhydride groups may be generated in situ during preparation of poly(acrylic acid). These examples are not limiting and the mono(hydroxyalkyl)urea and polysaccharide crosslinking system according to the present invention may be used to crosslink virtually any molecule which comprises at least two functional groups selected from the group consisting of carboxyl, amine and anhydride. The mono(hydroxyalkyl)urea crosslinking agent is very versatile and may be used easily to crosslink aqueous solution polymers, organic solution polymers, polymer melts, emulsion polymers, aqueous and non-aqueous dispersions of polymers, and powders.

The polysaccharides of the present invention are derived from natural products, including plant, animal and microbial sources. Examples of polysaccharides Include starch, cellulose, gums such as guar and xanthan, alginates, pectin and gellan. Polysaccharide starches include maize or com, waxy maize, high amylose maize, potato, tapioca and wheat starch. Other starches include varieties of rice, waxy rice, pea, sago, oat, barley, rye, amaranth, sweet potato, and hybrid starches available from conventional plant breeding, e.g., hybrid high amylose starches having amylose content of 40% or more, such as high amylose corn starch. Also useful are genetically engineered starches such as high amylose potato and potato amylopectin starches.

The polysaccharides may be modified or derivatized, such as by etherification, esterification, acid hydrolysis, dextrinization, oxidation or enzyme treatment (e.g., with ω-amylase, ï-amylase, pullulanase, isoamylase, or glucoamylase).

The polysaccharide of the present invention has a weight average molecular weight of at least 10,000 and preferably is 100,000 or more.

The mono(hydroxyalkyl)urea crosslinking agents of the present invention are derived from urea, comprise only a single urea group, a single hydroxyl group, and have at least two carbon atoms disposed between the urea group and the hydroxyl group. The crosslinking agent may include compounds represented by Structure (I). The two carbons disposed between the hydroxyl and urea groups may be in linear, branched or substituted configuration. 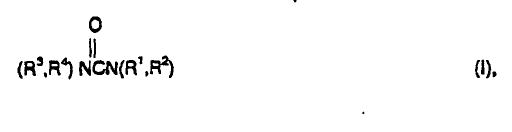 where 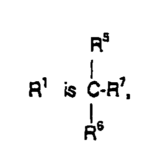 R² is H or R⁵, R³ is H or R⁵, and R⁴ is H, R¹, or A⁵, where
R⁵ is H, CH₂OH, 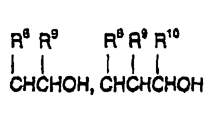 or C₁-C₄ alkyl,
R⁶ is H, CH₂OH, 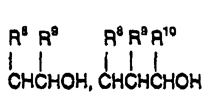 or C₁-C₄ alkyl, and
R⁷ is H, CH₂OH, 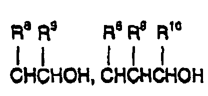 or C₁-C₄ alkyl,
where R⁸ is H, methyl or ethyl, R⁹ is H, methyl or ethyl, and R¹⁰ is H, methyl or ethyl.

Exemplary mono(hydroxyalkyl)urea crosslinkers include, without limitation, (2-hydroxyethyl)urea, (3-hydroxypropyl)urea, (4-hydroxybutyl)urea, 1,1-dimethyl-2-hydroxyethylurea, 1-ethyl-2-hydroxyethylurea, and (2-hydroxyethyl)ethyleneurea. The terms "crosslinking agent" and "crosslinker" are used interchangeably herein.

In certain embodiments of the invention, the PFM may be generated in situ from starting molecules which do not comprise at least two functional groups selected from the group consisting of carboxyl and anhydride. When the starting molecules and the mono(hydroxyalkyl)urea and polysaccharide crosslinking system are combined under certain conditions effective to induce crosslinking, functional groups will be generated such that the molecules comprise at least two functional groups selected from the group consisting of carboxyl, amine, and anhydride. The functional groups may be generated in situ by the addition of heat to the system or by chemical reaction with the starting molecules. For example, acid catalyzed hydrolysis of alkyl esters such as methyl or *t*-butyl, are very facile in generating carboxylic acid. Other mechanisms of generating functional groups in situ will be readily apparent to those skilled in the art once having the benefit of the teachings contained herein.

The PFM and the mono(hydroxyalkyl)urea crosslinking agent will be present in relative amounts such that the ratio of the sum total number of equivalents of the functional groups contained in the PFM to the number of equivalents of the hydroxyl groups contained In the crosslinker ranges from about 0.2:1 to about 100:1. Preferably, the ratio of the sum total number of equivalents of the functional groups contained in the PFM to the number of equivalents of the hydroxyl groups contained in the mono(hydroxyalkyl)urea crosslinker ranges from about 0.2:1 to about 10:1.

The polysaccharide will be present in relative amounts such that the weight ratio of polysaccharide and polyfunctional molecule ranges from about 1:100 to 100:1. In certain embodiments, the amount of polysaccharide will be determined by the amount sufficient to achieve a desired crosslink level at a particular temperature. In other embodiments, the amount of polysaccharide may be determined by the amount sufficient to achieve biodegradable characteristics In the final composition or article of manufacture.

In certain embodiments of the present invention, Lewis acid and Lewis base catalysts may be used in combination with the crosslinking agent in order to further enhance crosslinking. Such catalysts generally include clays, silica, including without limitation colloidal silica, organic amines, quaternized-amines, metal oxides, metal sulfates, metal chlorides, urea sulfate, urea chloride and silicate-based catalysts. Phosphorus-containing catalysts may be used in the present invention, including without limitation alkali metal hypophosphite salts, alkali metal phosphites, alkali metal polyphosphates, alkali metal dihydrogen phosphates, polyphosphoric acid and alkyl phosphinic acids. Such catalysts, when used, are used in less than stoichiometric amounts as the maximum level allowed, and in minimum amounts effective to improve crosslinking compared to a non-catalyzed, crosslinked composition.

In methods of achieving crosslinked systems from the combination of a polyfunctional molecule, polysaccharide, and mono(hydroxyalkyl)urea, the components are combined under conditions effective to induce crosslinking. These conditions may be provided by adjusting temperature and/or pressure. For example, it is advantageous to cure the compositions at temperatures around 100°C, preferably greater than 100°C, in order to drive off water from the system. In fact, one of the advantages of the crosslinkers of the present invention is that they work particularly well in systems which must be cured at temperatures greater than 100°C. Curing may occur at pressures where water may be removed from the system, for example at low pressures or under vacuum. Both temperature and pressure be may be adjusted such that water may be removed from the system. Crosslinking may be effected by radiation, such as microwave radiation, to promote heating and water removal. Additionally, crosslinking may be induced by chemical reaction. For example, as noted herein above, under certain conditions PFMs may be generated in situ. Whether crosslinking be induced by heat transfer or by chemical reaction, the conditions must be effective to remove water from the system, thereby inducing crosslinking.

Compositions of the present invention may be used in preparing a number of compositions and articles of manufacture and may be applied to polymeric natural substrates, such as woven or non-woven cellulose, wood, leather, paper, cotton, wool, rayon and silk, and polymeric synthetic substrates, such as polyolefin, polyester, polyamide, polyvinyl chloride, polyvinylidene chloride and polyimide. Other substrates to which the compositions may be applied include glass, metal and composite substrates such as sand, ceramic, foundry sand and molds. The compositions are also useful in absorbent and super-absorbent articles, including personal hygiene articles such as diapers, and incontinence pads. The compositions may be used in preparing coatings, such as automotive coatings, powder coatings, adhesive coatings, inks and paints. The compositions also may be used as binders or sizing agents in the preparation of, for example, glass or cellulosic fibers, non-woven paper products, fiberglass insulation or batting, glass fiber rovings and molded fiberglass articles. The compositions also may be used as binders in woven and nonwoven textiles and as backcoatings in carpets and other textiles. The compositions further may be used as saturants in the preparation of laminates, foams and mastics and as adhesives for the natural and synthetic substrates noted above.

Representative crosslinking systems of the present invention and methods for making same are set forth below. While one skilled in the art may be aware of other means of producing such compounds, the following examples are among the preferred methods for preparing the crosslinking agents.

### Synthesis of Crosslinking Agents

### Example 1

61 g monoethanolamine and 60 g urea were charged in a 1L flask equipped with heating mantle, thermometer and stirrer and allowed to react at 115°C for 3 hours. A nitrogen purge was used to remove evolving ammonia. The progress of reaction was monitored by amine titration. A clear, hygroscopic liquid was obtained which contained a mixture of (2-hydroxyethyl)urea and 2-oxazolidone, which could be used as a crosslinker without purification.

In like manner, additional alkanolamines could be reacted In equimolar amounts with urea to obtain mono(hydroxyalkyl)urea crosslinkers, and include without limitation 3-aminopropanol, 4-aminobutanol, 2-amino-1-butanol, and 2-amino-2-mathyl-1-propanol.

### Example 2

61 g of monoethanolamine in 100 g water was neutralized with concentrated hydrochloric acid. 81 g potassium cyanate was added and the mixture heated to 90°C for 2 hours. After cooling to ambient temperature, potassium chloride was precipitated by addition of 200 ml of ethanol. The salt was filtered out and the final product was obtained upon removal of water and ethanol by rotary evaporation. The product was a hygroscopic liquid containing (2-hydroxyethyl)urea, which could be used as a crosslinker without further purification. The product similarly could be obtained using other acids to neutralize the amine, e.g. sulfuric acid, and using other cyanates, e.g. sodium cyanate.

### Example 3

Using the method of example 1, the reaction also can be conducted effectively using refluxing water as a means of removing evolved ammonia. 61 g diethanolamine, 18 g water and 60 g urea were charged in a 1L flask equipped with heating mantle, thermometer and stirrer and allowed to react at 115°C for 3 hours.

### Procedure for Determining Extent of Crosslinking by Measuring Tensile Strength

The following procedure was used for measuring the tensile strength of a formulation containing mono(hydroxyalkyl)urea and polysaccharide.
1. Combine 75 parts by weight of poly(acrylic acid) having a 60,000 Mw; 32 parts by weight of mono(2-hydroxyethyl)urea (MHEU); 25 parts by weight of OSA-modified, 54 water fluidity amioca; and catalyst if present, based on equivalent weights of solids. The ingredients are mixed for 5 minutes at room temperature to form a binder formulation
2. Apply the binder formulation to Whatman GF/B glass fiber filter paper using a dip/squeeze saturation, followed by drum drying at 210°F. The target pick-up is 20%, and is controlled by the formulation solids.
3. The saturated glass is cured for 10 minutes at the temperature listed.
4. The saturated glass is cut into 1 x 4.5" tensile strips in the cross-machine direction.
5. Tensiles are pulled using one-inch wide facings, a three inch gage length, and a twelve inch/minute crosshead speed, all based on ASTM Method D1682-64.
6. Boiled tensiles are pulled immediately after soaking for one minute in boiling water.

The following tables set forth crosslinking data for compositions of the present invention and for comparative compositions

### EXAMPLE 4

This example shows the effect of crosslinking, as measured by dry tensiles, with and without polysaccharide, and at different cure temperatures.

**Table 1**

| **Crosslinking on Glass Substrate** | | | | |
|---|---|---|---|---|
| **Crosslinker** | **Polysaccharide** | **% Pickup** | **Dry Tensiles** **(Ib)** **CMD** | **Cure temperature,** **°F** |
| | | | | |
| MHEU, 43% | None. Comparative | 20 | 13.2 | 300 |
| MHEU, 43% | Amioca, FK54 | 20 | 15.0 | 300 |
| MHEU, 43% | Amioca, FK54 | 20 | 15.0 | 350 |
| MHEU, 43% | Amioca, FK54 | 20 | 12.7 | 400 |
| | | | | |

### EXAMPLE 5

This example shows the effect of the addition of a catalyst, using the same conditions as in Example 4, with a 10 minute cure at 360°F, and measuring the boiled tensile strength.

**Table 2**

| **Crosslinking with and without Catalyst** | | | |
|---|---|---|---|
| **Catalyst** | **Catalyst Level** | **%** **Pickup** | **Boiled Tensiles** |
| None | 0 | 20 | 2.3 |
| | | | |
| Sodium Hypo-phosphite | 5 wt % | 19 | 4.1 |
| | | | |

## Claims

1. A composition, comprising:
a) a poly-functional molecule comprising at least two functional groups selected from the group consisting of carboxyl, amine, and anhydride;
b) a polysaccharide having a molecular weight of at least 10,000; and
c) at least one crosslinking agent present in amounts effective to provide crosslinked compositions, said crosslinking agent selected from the group consisting of a mono(hydroxalkyl)urea crosslinking agent comprising a single urea group, a single hydroxyl group, and at least two carbon atoms are disposed between the urea group and the hydroxyl group, and 2-oxazolidone.

2. The composition of Claim 1 wherein the ratio of the sum total number of equivalents of functional groups contained in the poly-functional molecule to the number of equivalents of hydroxyl groups contained in the crosslinking agent ranges from 0.2:1 to 100:1, and preferably from 0.2:1 to 10:1.

3. The composition of claim 1 wherein the weight ratio or polyfunctional molecule to said polysaccharide ranges from 1:100 to 100:1.

4. The composition of Claim 1 wherein the crosslinking agent is represented by Structure (I): 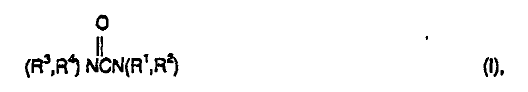 where 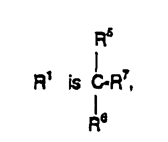 R² is H or R⁵, R³ is H or R⁵, and R⁴ is H, R¹, or R⁵, where R⁵ is H, CH₂OH, 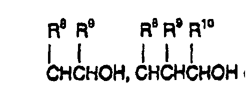 or C₁-C₄ alkyl, R⁶ is H, CH₂OH, 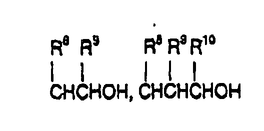 or C₁-C₄ alkyl, and
R⁷ is H, CH₂OH, 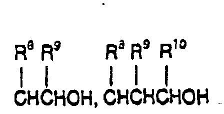 or C₁-C₄ alkyl,
where R⁸ is H, methyl or ethyl, R⁹ is H, methyl or ethyl, and R¹⁰ is H, methyl or ethyl.

5. The composition of Claim 1 wherein said mono(hydroxyalkyl)urea crosslinking agent is selected from the group consisting of (2-hydroxyethyl)urea, (3-hydroxypropyl)urea, (4-hydroxybutyl)urea, 1,1-dimethyl-2-hydroxyathylurea, 1-ethyl-2-hydroxyethylurea, and (2-hydroxyethyl)-ethyleneurea.

6. The composition of Claim 1 further comprising less than stoichiometric amounts of a catalyst.

7. A method of crosslinking a poly-functional molecule comprising at least two functional groups selected from the group consisting of carboxyl, anhydride and amine, said method comprising combining with said poly-functional molecule a polysaccharide and a crosslinking agent in amounts and under conditions effective to provide crosslinked compositions, said crosslinking agent selected from the group consisting of a mono(hydroxyalkyl)urea crosslinking agent comprising a single urea group, a single hydroxyl group, and at least two carbon atoms are disposed between the urea group and the hydroxyl group, and 2-oxazolidone.

8. An article of manufacture comprising a composition which comprises:
a) a poly-functional molecule comprising at least two functional groups selected from the group consisting of carboxyl, amine and anhydride:
b) a polysaccharide having a molecular weight of less than 10,000; and
c) a crosslinking agent present in amounts effective to provide crosslinked compositions, said crosslinking agent selected from the group consisting of a mono(hydroxyalkyl)urea crosslinking agent comprising a single urea group, a single hydroxyl group, and at least two carbon atoms are disposed between the urea group and the hydroxyl group, and 2-oxazolidone, wherein said crosslinking agent is essentially free of formaldehyde.

## Patentansprüche

1. Zusammensetzung, umfassend:
a) ein polyfunktionelles Molekül, das wenigstens zwei funktionelle Gruppen umfasst, die aus der Gruppe bestehend aus Carboxyl, Amin und Anhydrid, ausgewählt sind;
b) ein Polysaccharid mit einem Molekulargewicht von wenigstens 10.000 und
c) wenigstens ein Vernetzungsmittel, das in Mengen vorliegt, die wirksam sind, um vernetzte Zusammensetzungen bereitzustellen, wobei das Vernetzungsmittel aus der Gruppe ausgewählt ist, die aus einem Mono(hydroxyalkyl)harnstoff-Vernetzungsmittel, das eine einzelne Harnstoffgruppe, eine einzelne Hydroxylgruppe und wenigstens zwei Kohlenstoffatome zwischen der Harnstoffgruppe und der Hydroxylgruppe angeordnet umfasst, und 2-Oxazolidinon besteht.

2. Zusammensetzung nach Anspruch 1, wobei das Verhältnis der Summe der Gesamtzahl an Äquivalenten von funktionellen Gruppen, die im polyfunktionellen Molekül enthalten sind, zu der Anzahl an Äquivalenten von Hydroxylgruppen, die im Vernetzungsmittel enthalten sind, im Bereich von 0,2:1 bis 100:1 und vorzugsweise von 0,2:1 bis 10:1 liegt.

3. Zusammensetzung nach Anspruch 1, wobei das Gewichtsverhältnis des polyfunktionellen Moleküls zu dem Polysaccharid im Bereich von 1:100 bis 100:1 liegt.

4. Zusammensetzung nach Anspruch 1, wobei das Vernetzungsmittel durch die Struktur (I) dargestellt wird: 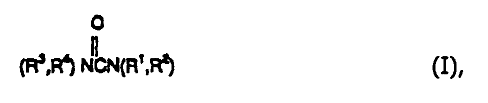 worin R¹ für 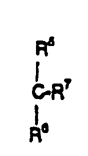 steht,
R² H oder R⁵ ist, R³ H oder R⁵ ist und R⁴ H, R¹ oder R⁵ ist, worin
R⁵ für 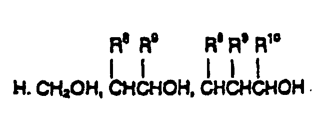 oder C₁-C₄ Alkyl steht,
R⁶ für 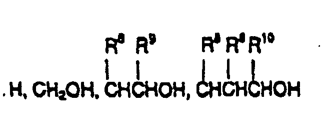 oder C₁-C₄ Alkyl steht und
R⁷ für H, 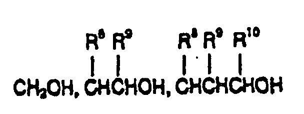 oder C₁-C₄ Alkyl steht,
worin R⁸ für H, Methyl oder Ethyl steht, R⁹ für H, Methyl oder Ethyl steht und R¹⁰ für H, Methyl oder Ethyl steht.

5. Zusammensetzung nach Anspruch 1, wobei das Mono(hydroxyalkyl)harnstoff-Vernetzungsmittel aus der Gruppe, bestehend aus (2-Hydroxyethyl)harnstoff, (3-Hydroxypropyl)harnstoff, (4-Hydroxybutyl)harnstoff, 1,1-Di-methyl-2-hydroxyethylharnstoff, 1-Ethyl-2-hydroxyethylharnstoff und (2-Hydroxyethyl)ethylenhamstoff, ausgewählt ist.

6. Zusammensetzung nach Anspruch 1, die außerdem weniger als stöchiometrische Mengen eines Katalysators umfasst.

7. Verfahren zur Vernetzung eines polyfunktionellen Moleküls, das wenigstens zwei funktionelle Gruppen, ausgewählt aus der Gruppe bestehend aus Carboxyl, Anhydrid und Amin, umfasst, wobei das Verfahren Kombinieren eines Polysaccharids und eines Vernetzungsmittels mit dem polyfunktionellen Molekül in Mengen und unter Bedingungen, die zur Bereitstellung vernetzter Zusammensetzungen effektiv sind, wobei das Vernetzungsmittel aus der Gruppe, bestehend aus einem Mono(hydroxyalkyl)harnstoff-Vernetzungsmittel, das eine einzelne Harnstoffgruppe, eine einzelne Hydroxylgruppe und wenigstens zwei Kohlenstoffatome zwischen der Harnstoffgruppe und der Hydroxylgruppe angeordnet umfasst, und einem 2-Oxazolidon, ausgewählt ist.

8. Herstellungsgegenstand, umfassend eine Zusammensetzung, die umfasst:
a) ein polyfunktionelles Molekül, das wenigstens zwei funktionelle Gruppen, ausgewählt aus der Gruppe bestehend aus Carboxyl, Amin und Anhydrid, umfasst;
b) ein Polysaccharid mit einem Molekulargewicht von weniger als 10.000 und
c) ein Vernetzungsmittel, das in Mengen vorliegt, die zur Bereitstellung vernetzter Zusammensetzungen wirksam sind, wobei das Vernetzungsmittel aus der Gruppe, bestehend aus einem Mono(hydroxyalkyl)harnstoff-Vernetzungsmittel, das eine einzelne Harnstoffgruppe, eine einzelne Hydroxylgruppe und wenigstens zwei Kohlenstoffatome zwischen der Harnstoffgruppe und der Hydroxylgruppe angeordnet umfasst, und 2-Oxazolidon, ausgewählt wird, wobei das Vernetzungsmittel im Wesentlichen formaldehydfrei ist.

## Revendications

1. Composition comprenant :
a) une molécule polyfonctionnelle comprenant au moins deux groupes fonctionnels choisis dans le groupe consistant en des groupes carboxyle, amine et anhydride ;
b) un polysaccharide ayant un poids moléculaire d'au moins 10 000 ; et
c) au moins un agent de réticulation présent en des quantités efficaces pour donner des compositions réticulées, ledit agent de réticulation étant choisi dans le groupe consistant en un agent de réticulation mono(hydroxyalkyl)urée comprenant un groupe urée unique, un groupe hydroxyle unique, au moins deux atomes de carbone étant disposés entre le groupe urée et le groupe hydroxyle, et la 2-oxazolidone.

2. Composition suivant la revendication 1, dans laquelle le rapport du nombre total d'équivalents de groupes fonctionnels présents dans la molécule polyfonctionnelle au nombre d'équivalents de groupes hydroxyle présents dans l'agent de réticulation est compris dans l'intervalle de 0,2:1 à 100:1, et de préférence de 0,2:1 à 10:1.

3. Composition suivant la revendication 1, dans laquelle le rapport pondéral de la molécule polyfonctionnelle audit polysaccharide est compris dans l'intervalle de 1:100 à 100:1.

4. Composition suivant la revendication 1, dans laquelle l'agent de réticulation est représenté par la structure (I) : 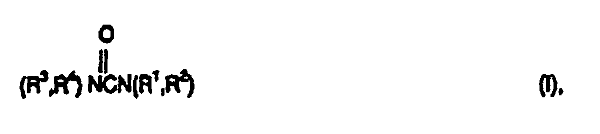 dans laquelle R¹ représente un groupe 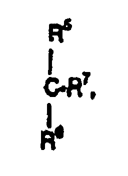 R² représente H ou un groupe R⁵, R³ représente H ou un groupe R⁵ et R⁴ représente H, un groupe R¹ ou R⁵, dans lequel
R⁵ représente H, un groupe CH₂OH, 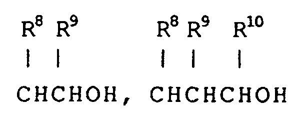 ou un groupe alkyle en C₁ à C₄,
R⁶ représente H, un groupe CH₂OH, 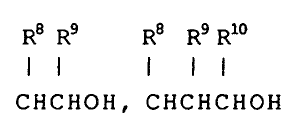 ou un groupe alkyle en C₁ à C₄, et
R⁷ représente H, un groupe CH₂OH, 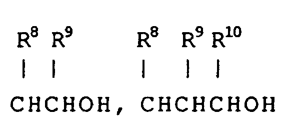 ou un groupe alkyle en C₁ à C₄,
R⁸ représentant H, un groupe méthyle ou éthyle, R⁹ représentant H, un groupe méthyle ou éthyle et R¹⁰ représentant H, un groupe méthyle ou éthyle.

5. Composition suivant la revendication 1, dans laquelle ledit agent de réticulation mono(hydroxyalkyl)urée est choisi dans le groupe consistant en (2-hydroxyéthyl)urée, (3-hydroxypropyl)urée, (4-hydroxybutyl)urée, 1,1-diméthyl-2-hydroxyéthylurée, 1-éthyl-2-hydroxyéthylurée et (2-hydroxyéthyl)-éthylène-urée.

6. Composition suivant la revendication 1, comprenant en outre une quantité inférieure aux quantités stoechiométriques d'un catalyseur.

7. Procédé de réticulation d'une molécule polyfonctionnelle comprenant au moins deux groupes fonctionnels choisis dans le groupe consistant en des groupes carboxyle, anhydride et amine, ledit procédé comprenant l'association à ladite molécule polyfonctionnelle d'un polysaccharide et d'un agent de réticulation en des quantités et dans des conditions efficaces pour donner des compositions réticulées, ledit agent de réticulation étant choisi dans le groupe consistant en un agent de réticulation mono(hydroxyalkyl)-urée comprenant un groupe urée unique, un groupe hydroxyle unique, au moins deux atomes de carbone étant disposés entre le groupe urée et le groupe hydroxyle, et la 2-oxazolidone.

8. Article manufacturé comprenant une composition qui comprend :
a) une molécule polyfonctionnelle comprenant au moins deux groupes fonctionnels choisis dans le groupe consistant en des groupes carboxyle, amine et anhydride ;
b) un polysaccharide ayant un poids moléculaire inférieur à 10 000 ; et
c) un agent de réticulation présent en des quantités efficaces pour donner des compositions réticulées, ledit agent de réticulation étant choisi dans le groupe consistant en un agent de réticulation mono(hydroxyalkyl)-urée comprenant un groupe urée unique, un groupe hydroxyle unique, au moins deux atomes de carbone étant disposés entre le groupe urée et le groupe hydroxyle, et la 2-oxazolidone, ledit agent de réticulation étant particulièrement dépourvu de formaldéhyde.
